# EUROPEAN PATENT SPECIFICATION

(11) **EP 3 285 342 B1**
(45) Date of publication and mention of the grant of the patent: **29.07.2020**
(21) Application number: 17185898.8
(22) Date of filing: 11.08.2017
(51) Int. Cl.: H01T 1/20, H01T 2/00, H01T 4/10, F02P 17/00, F23Q 3/00, F23Q 23/00

(54) **KRYPTON-85-FREE SPARK GAP WITH A DISCHARGE PROBE**
KRYPTON-85-FREIE FUNKENSTRECKE MIT EINER ENTLADUNGSSONDE
ÉCLATEUR EXEMPT DE KRYPTON 85 AVEC SONDE DE DÉCHARGE

(30) Priority: 18.08.2016 US 201662376426 P; 06.01.2017 US 201715400749
(43) Date of publication of application: 21.02.2018
(73) Proprietor: General Electric Company, Schenectady, NY 12345 (US)
(72) Inventor: MICHAEL, Joseph Darryl, Niskayuna, NY New York 12309 (US); SOMMERER, Timothy John, Niskayuna, NY New York 12309 (US); YOUNSI, Karim, Niskayuna, NY New York 12309 (US); RAHMANE, Mohamed, Niskayuna, NY New York 12309 (US); TROTTER, Jason Fredrick, Niskayuna, NY New York 12309 (US)
(74) Representative: Openshaw & Co.

(56) References cited:
- FR-A1- 2 984 028
- US-A- 4 484 106
- US-A- 4 890 040

## Description

### CROSS-REFERENCE TO RELATED APPLICATIONS

This application claims priority to and benefit of U.S. Provisional Patent Application Serial No. 62/376,426, entitled "KRYPTON85-FREE SPARK GAP WITH A GLOW DISCHARGE," filed August 18, 2016.

### BACKGROUND

The subject matter disclosed herein relates to spark gaps for use in ignition systems or other suitable systems.

Spark gaps are passive, two-terminal switches that are open when the voltage across the terminals is low, and then close when the voltage across the terminals exceeds a design value (e.g., 3 kV). The spark gap then re-opens when the current has fallen to a low level or when most of the energy from the voltage source is dissipated. Internally, the current is carried between two metal electrodes that are separated by a small 'gap' (∼mm) that is filled with a gas or gas mixture (e.g., Ar-H₂-Kr) near atmospheric pressure. The gas is ordinarily insulating, but it becomes a conducting plasma 'spark' when the voltage between the two electrodes exceeds the design value which corresponds to the breakdown voltage.

For various applications, one parameter of interest may be the time between when a sufficient voltage is applied to the spark gap and the time at which it becomes conducting. This time corresponds to the 'breakdown' processes that initiate the transition of the gas from an insulator to a conductor.

There is an idealized but useful view of electrical breakdown as a two-step process-a 'statistical' time for the first electron to appear, followed by a 'formative' time for the electrons to 'avalanche' to a highly conductive state. A free electron appears at some time and location in the gap, and is accelerated by the electric field that is created by the potential difference between the electrodes. Once the electron gains sufficient energy there is some probability for it to ionize a gas atom or molecule and release a second free electron. Each electron is then accelerated and the process repeats, leading to an electron avalanche that makes the gas highly conducting. The energy gain and multiplication processes must overcome various energy and particle loss processes, and the first free electron should be created in preferred locations (e.g., at or near the negative electrode) for maximum effectiveness.

The time required for the second (avalanching) process is the 'formative time lag'. It is generally short and can be practically ignored. Thus, the time required for the first process (the initial electron) is the 'statistical time lag', and it is this 'first electron problem' that is of primary interest in practice. In some devices such as laboratory apparatus or large electric discharge lamps the 'first electron problem' is solved by doing nothing more than waiting for a cosmic ray to create a free electron when it collides with a gas atom, gas molecule, or surface within the device. Electron-ion pairs are always being created at a given rate in atmospheric air by energetic cosmic rays that can easily penetrate into gas volumes within devices and structures. A Geiger counter is an example of a device that detects such events.

However, the ubiquitous cosmic-ray process cannot be relied upon to create effective free electrons within a required timeframe that may be needed for reliable operation of many devices that incorporate a spark gap. In particular, for device employing a spark gap the timeframe is typically too short to rely on a cosmic ray based process because the interaction volume (the region between the electrodes) is relatively small.

Instead, the conventional approach to solving the first-electron problem in a spark gap context (as well as in other devices dealing with similar issues, such as small electric discharge lamps) is to add a source of radioactivity, for example in the form of radioactive krypton-85 (e.g., ⁸⁵Kr), which undergoes beta decay to emit an energetic (687 keV) electron, to generate seed electrons and reduce statistical time-lag to acceptable values. Other radioactive materials such as tritium or thorium are sometimes used. The addition of a radioactive component is sometimes referred to as 'radioactive prompting' .

However, radioactive materials, even at trace level, are generally not desirable in a component or product because these materials add to the cost of manufacturing, handling, and shipping.

US 4,890,040 A and US 4,484,106 A disclose spark gap devices. FR 2 984 028 A1 relates to a spark-gap having a cathode whose surface is made of porous heat-resisting materials and discloses features generally corresponding to the preamble of claim 1.

### BRIEF DESCRIPTION

In one aspect as defined in claim 1, a spark gap device includes a first electrode having a first surface, a second electrode having a second surface offset from and facing the first surface, and a discharge probe configured to emit light toward the first and second surface such that photons emitted by the discharge probe when the spark gap device is operated are incident on the first surface and cause electron emission from the first surface, wherein the first electrode and the second electrode are disposed in a sealed envelope; the discharge probe is positioned exterior to the sealed envelope and is configured also to emit the light toward the second surface.

In another aspect as defined in claim 8, a method for generating a conductive plasma includes applying a voltage across a spark gap device of claim 1 having a first electrode and a second electrode, where the first electrode includes a surface facing the second electrode, generating free electrons at the surface of the first electrode and the surface of the second electrode using a discharge probe as a light source, and subsequent to generating the free electrons, generating the conductive plasma across the spark gap device. The first electrode and the second electrode are disposed in a sealed envelope; and the discharge probe is positioned exterior to the sealed envelope. The method includes also generating free electrons at the surface of the second electrode using the discharge probe as a light source.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 depicts voltage with respect to time in spark gap operation so as to illustrate concepts related to the present approach;
FIG. 2 depicts a spark gap and light source, in accordance with aspects of the present disclosure;
FIG. 3 is a graphical illustration of a performance of spark gaps that include the light source of FIG. 2 compared to a performance of spark gaps that do not include the light source, in accordance with aspects of the present disclosure; and
FIG. 4 is an engine, here a jet engine, employing ignition components that include a spark gap as discussed herein and in accordance with aspects of the present disclosure.

### DETAILED DESCRIPTION

One or more specific embodiments will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Furthermore, any numerical examples in the following discussion are intended to be non-limiting, and thus additional numerical values, ranges, and percentages are within the scope of the disclosed embodiments.

The present approach relates to spark gaps, such as those used in ignition systems for combustion engines, as well as in other contexts such as surge protection, power switching, and so forth.

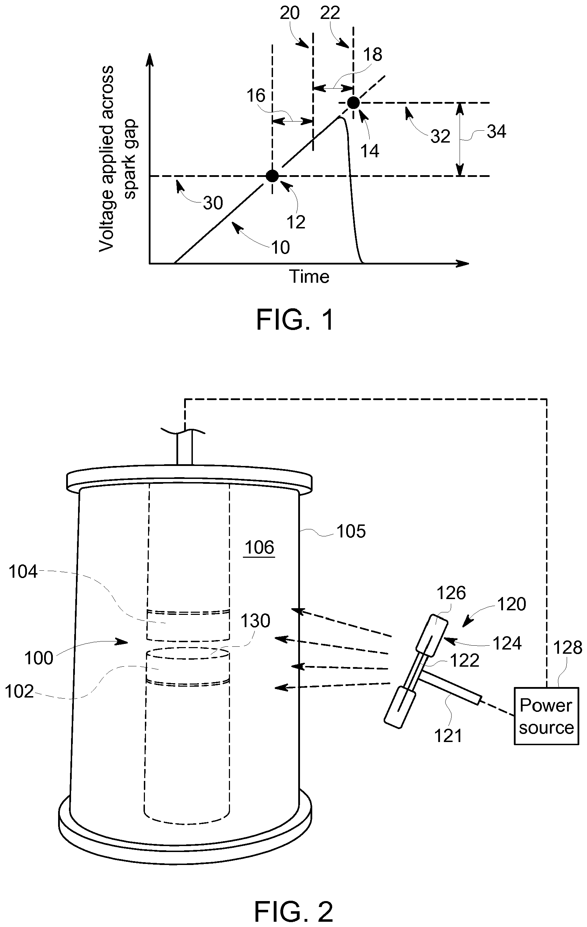

By way of introduction to the concepts and terminology used herein, an illustrative example of the operation of a spark gap is illustrated in FIG. 1. In this example, if the voltage waveform 10 is a ramp, the rate of voltage rise is 6 kV/s, and the desired voltage rating is 3 ± 0.05 kV, then the total time from Point 12 (the time sufficient voltage for the spark gap to fire is reached) to Point 14 (the time when the spark gap is closed) should be no more than 17 ms. This time corresponds to the 'breakdown' processes that initiate the transition of the gas from an insulator to a conductor.

As can be appreciated from FIG 1, the breakdown voltage 22 depends on the intrinsic properties of the spark-gap, as well as the voltage ramp 10 that is defined by other portions of the circuit. If the rate of voltage rise is slower, then the voltage-rise between Point 12 and Point 14 is reduced, so Point 12 is sometimes referred to as the 'intrinsic' breakdown voltage of the spark gap, because it does not depend on the circuit properties.

As noted above, an idealized but useful view of electrical breakdown is to view it as a two-step process, with a first component corresponding to a 'statistical' time 16 for the first electron to appear (at time 20), followed by a second component corresponding to a 'formative' time 18 for the electrons to 'avalanche' to a highly conductive state, occurring at time 22 when the spark gap closes. In this example, the difference between the voltage 30 sufficient for the spark gap to fire and the voltage 32 at which the spark gap closes is the variation 34 in gap voltage.

In terms of the underlying concept, a free electron appears at some time and location in the gas surrounding the spark gap, and is accelerated by the electric field that is created by the potential difference between the electrodes. Once it gains sufficient energy there is some probability for it to ionize a gas atom or molecule and release a second free electron. Each electron is then accelerated and the process repeats, leading to an electron avalanche that makes the gas highly conducting. The energy gain and multiplication processes must overcome various energy and particle loss processes, and first electrons are preferably created in certain locations (e.g., near the negative electrode or cathode) for maximum effectiveness.

As noted above, the time 16 required for the first process (i.e., the release of the initial electron) is referred to as the 'statistical time lag', and it is this 'first electron problem' that is addressed in the present approach. The present approach solves the first-electron problem in the spark gap (i.e., the statistical time lag) without relying on the traditional approach of providing a source of ionizing radiation (e.g., ⁸⁵Kr), which is generally undesirable, and thus does not employ 'radioactive prompting'. Similarly, the present approach does not rely solely on the effects of cosmic-rays, for generation of the initial electrons as such rays typically are insufficient to generate first electrons at a sufficient rate needed in a spark gap ignition context (or other industrial or mechanical context).

With the preceding introduction in mind, in the present approach ⁸⁵Kr is eliminated from the spark gap and the photo-electric effect is instead employed to generate seed electrons. By way of example, in one implementation, a light source (e.g., a discharge probe that includes electrodes in a sealed tube filled with an inert gas) is employed that emits at a specified or designed nominal wave length (or range of wavelengths) at a suitable or sufficient level of emitted flux.

In the photoelectric process the absorption of a photon by a material causes the material to emit an electron. The energy of the photon must exceed the work-function of the material. The work-function of materials is typically in the range 2-6 electron-volts. The energy *ε* of a photon is related to its wavelength *λ* through the expression *ε* = *hc*/*λ,* where *h* is Planck's constant, *c* is the speed of light. In practical units *ε*=1240/*λ*, where *ε* is in units of electron-volts and is *λ* in units of nanometers. To be effective for photoelectron emission the wavelength of light should, therefore, be shorter than a certain value in the range 200-600 nanometers, corresponding to 2-6 electron-volts, with the exact value depending on the specific material.

Further, if the light source is to be located outside the light-transmissive (e.g., glass) envelope of a spark-gap, then the spectral transmission of the envelope should be considered. By way of example, borosilicate glass absorbs strongly at wavelengths less than 300 nanometers, corresponding to an energy of 4 electron-volts. So if, by way of example, a given material has a work-function of 3 electron-volts, and a light source is placed outside the glass envelope to create photoelectrons, then only photons of energy 3-4 electron volts (300-400 nanometers) will be effective. Photons with wavelength longer than 400 nanometers will not have sufficient energy to cause photoemission, and photons with wavelength shorter than 300 nanometers will be absorbed by the glass. Thus, the material to be photo-electrically stimulated, the wavelength of light to be employed, and the transmissive properties of the envelope are all factors to be considered in the design and configuration or a spark gap system as discussed herein. It should be noted that in other embodiments, the light source may be positioned inside of the envelope.

With the preceding in mind, the light source (e.g., a discharge probe having wire electrodes sealed in a tube with inert gas) is located with respect to one of the electrodes (e.g., the cathode and/or the anode) of a spark gap and the emitted photons incident on the surface of the electrode cause it to emit electrons via the photo-electric effect. These electrons are then available to initiate the gas discharge or breakdown event. In accordance with some implementations, the electrode on which photons from the light source are incident and which emits electrons is a conventional electrode (e.g., a conventional conductive metal substrate and surface), as opposed to an electrode having coated surface or other emissive coating (e.g., a special purpose emissive coating) and in contrast to a photoelectrode (e.g., a photocathode or other an annular electrode or coil having a coating or composition specifically for the purpose of emitting electrons in response to light photons). However, in other embodiments, electrodes having a coated surface and/or photoelectrodes may be utilized.

In one implementation, a light source may be used, which may be adjusted so as to find a suitable (or optimal) range of wavelengths and/or light flux for a given spark gap configuration or application. In one embodiment, the light source may be a discharge probe that includes wire electrodes (e.g., two or more electrodes) sealed in an envelope filled with an inert gas (e.g., nitrogen, argon, or another suitable inert gas). The discharge probe may be operated at a minimum threshold current that will generate light sufficient to cause the spark gap to breakdown. With the preceding in mind, FIG. 2 depicts an example of a spark gap 100 suitable for use in an ignition system (such as for use in combustion engines), surge protection contexts, or power switching. The spark gap 100 as discussed herein refers to an assembly of a separated pair of electrodes (i.e., anode 102, and cathode 104) within a sealed environment 105 (e.g., a glass envelope or housing) containing a gas mixture 106.

In one implementation, a light source 120 may be employed. In such an example, the light source 120 may be used to assess the effect of wavelength (photon energy) and photon flux on the breakdown voltage of different gaps, and to thereby identify suitable ranges of photon energy and/or flux for different gap types and/or distances. As shown in the illustrated embodiment of FIG. 2, the light source 120 may be a discharge probe 121 that includes electrodes 122 (e.g., two or more wire electrodes) sealed in a tube 124 filled with an inert gas 126 (e.g., nitrogen). In some embodiments, a pressure of the inert gas 126 in the tube 124 may be between 1 Torr and 10 Torr, between 2 Torr and 8 Torr, or between 4 Torr and 6 Torr. In other embodiments, the pressure of the inert gas 126 in the tube 124 may be approximately (e.g., within 5% or within 10% of) 5 Torr.

In some embodiments, the light source may also have the first electron problem. However, the light source 120 may be tuned and/or adjusted based on operating conditions of the spark gap 100 to reduce the first electron problem. For example, the light source 120 may be larger than a gap between the first electrode 102 and the second electrode 104 (e.g., to intercept cosmic rays), the light source 120 may include pointy electrodes (e.g., to encourage field emission), or a gas utilized within the light source 120 may be modified (e.g., so long as a suitable photon wavelength is achieved).

To generate light from the electrodes 122 of the discharge probe, a direct current (DC) voltage may be supplied to the electrodes 122 from a power source 128. As a result, current (e.g., approximately 1 milli-Amp) may flow through inert gas 126 of the discharge probe. In some embodiments, a first electrode 122 of the discharge probe may be coupled to the power source 128 and a second electrode 122 of the discharge probe may be coupled to the first electrode 102, the second electrode 104, or both. In other embodiments, the power source 128 of the light source 120 having the electrodes 122 may be the same as the power source for the electrodes 102 and 104 of the spark gap 100. In some embodiments, an amount of DC voltage supplied to the electrodes 122 from the power source 128 may adjust a wavelength, frequency, and/or amount of energy of the light emitted by the light source. Additionally, the power supply 128 may be configured to apply sufficient voltage to the light source 120 sufficiently before the spark 100 gap is triggered to allow time to initiate the light source 120. For example, in some embodiments, the power supply 128 may provide voltage to the light source 120 between 100 milliseconds (ms) and 200 ms before a desired time for the spark gap 100 to fire.

The light source 120 may include various combinations of the inert gas 126, pressures of the inert gas 126, an amount of DC voltage supplied to the electrodes 122, and/or a configuration of the electrodes 122 to produce light having predetermined characteristics (e.g., wavelength, frequency, flux, etc.). For example, in some embodiments, the light source 120 may generate light having a wavelength of between 100 micrometers (µm) and 1000 µm, between 200 µm and 800 µm, or between 300 µm and 500 µm. In some embodiments, the wavelength of the light source 120 may be adjusted by a gas composition within the light source 120, and an intensity of the light source 120 may be adjusted by the power source 128.

In some embodiments, the light source 120 may be positioned inside the sealed environment 105 of the spark gap 100. In other embodiments, the light source 120 may be outside of the sealed environment 105 of the spark gap (e.g., as shown in FIG. 2). For example, the light source 120 may be mounted to an exterior surface of the sealed environment 105 such that the light source 120 directs light (e.g., photons) toward a surface 130 of at least one of the electrodes 102 and/or 104. When photons are emitted from the light source 120 and directed toward the surface 130 of at least one of the electrodes 102 and/or 104 of the spark gap 100, a breakdown event may be initiated in the spark gap 100 by the photo-electric effect.

Utilizing the light source 120 disclosed herein may enable the spark gap to operate over a wide range of temperatures because the spectrum and/or intensity of light emitted by the discharge probe is relatively insensitive to temperature fluctuations. For example, the electrodes 122 of the discharge probe 121 may include a metallic material (e.g., copper, aluminum, tungsten, or another suitable metallic material), which may be configured to withstand relatively high temperatures. Additionally, an operating life of the light source 120 may be enhanced because the current within the discharge probe (e.g., in the tube 124) is relatively low.

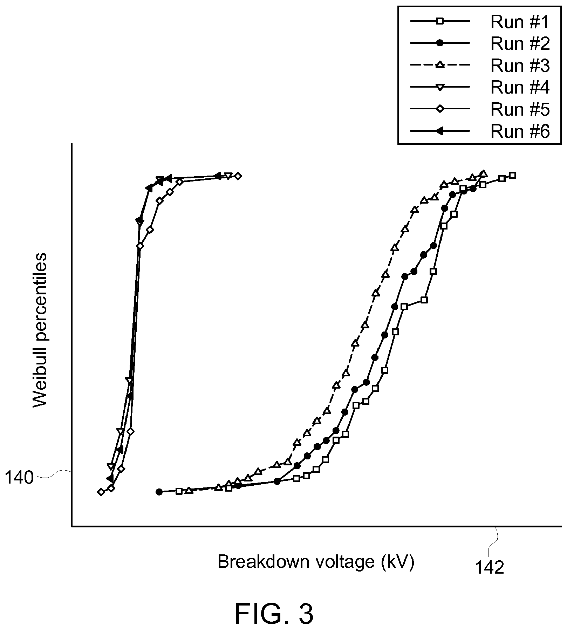

FIG. 3 is a graphical illustration that shows results in terms of breakdown voltage for the spark gap 100 having the light source 120 (e.g., the discharge probe having the electrodes 122 sealed in the tube 124 filled with the inert gas 126) when compared to a spark gap that does not include ⁸⁵Kr or the light source 120. As shown in the illustrated embodiment of FIG. 3, three of the spark gaps 100 having the light source 120 (Runs 4-6) were compared to three spark gaps that did not include either the light source 120 or ⁸⁵Kr (Runs 1-3). Weibull probabilities of each spark gap are shown on a y-axis 140 and breakdown voltage is shown on an x-axis 142. As used herein, Weibull probabilities may refer to a statistical distribution of a variation in breakdown voltage over a number of operations (e.g., 100 operations) of a given spark gap (e.g., Runs 1-6). As shown in FIG. 3, the spark gaps 100 having the light source 120 (Runs 4-6) generally produced a tight distribution of breakdown voltage, and a tighter distribution of breakdown voltage when compared to the spark gaps that did not include the light source 120 (Runs 1-3).

It should be noted that the present approach is not directed to the reduction of the breakdown voltage, which may be an issue in other contexts. Instead, the present approach is directed to providing a tight distribution of breakdown voltage, particularly in the absence of ⁸⁵Kr, not to reduce the breakdown voltage. With this in mind, the present approach relates to the use of a suitable ranges of energy and flux of the photons (as discussed in greater detail below) for application to spark gaps 100.

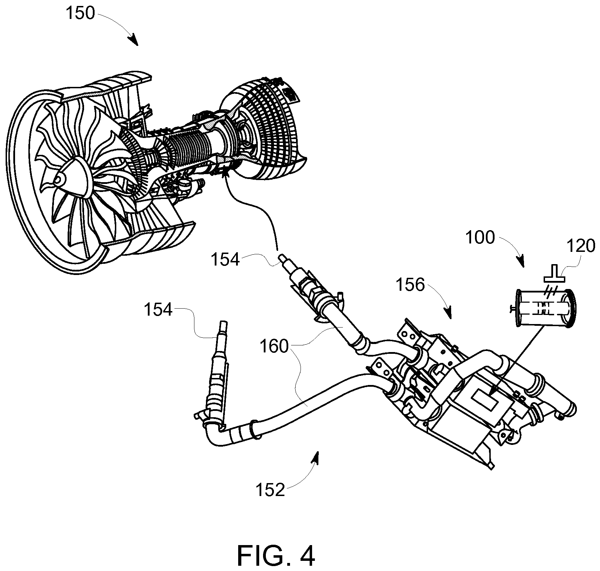

With the preceding in mind, FIG. 4 depicts an example of an engine 150, here a jet engine, in which the spark gap 100 using the light source 120 may be employed. For example, the spark gap 100 may be included as part of the fuel ignition system 152 for the engine 150 by which a fuel stream or vapor is combusted. In this example, a spark gap 100 may be provided for one or more igniters 154. For example, each spark gap 100 may be provided as part of an exciter component 156 in communication with a respective igniter 154 via a corresponding lead 160. In this manner, spark events induced at a given spark gap 100 may correspond to a conductive flow between the electrodes of the spark gap 100, causing an ignition event at the corresponding igniter 154 and an ignition event during operation of the engine 150. Though an engine 150 such as that depicted in FIG. 4 is one possible use for a spark gap 100 as discussed herein (e.g., as part of an ignition system), a spark gap 100 as presently disclosed may also be used in other ignition and non-ignition contexts.

Technical effects of the invention include an alternative approach to generating seed electrons at a spark gap, allowing ⁸⁵Kr to be eliminated from the gas mixture typically present at the spark gap while maintaining the same performance and function of the device. The present approach utilizes the photo-electric effect, using a light source with a specific nominal wave length (or range of wavelengths) at a specific level of emitted flux to generate seed electrons. The light source (e.g., a discharge probe that includes electrodes in a sealed tube filled with inert gas) is located with respect to a surface of one of the electrodes (e.g., the cathode) of a spark gap and the emitted photons landing incident on the surface of the electrode causes it to emit electrons needed to initiate the gas discharge or breakdown event. The present approach may be retrofit in existing packaging, such that there would be no major changes in the manufacturing of the spark gap 100 or the remainder of the ignition system.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A spark gap device (100), comprising:
a first electrode (102) having a first surface (130);
a second electrode (104) having a second surface offset from and facing the first surface (130); and
a discharge probe (121) configured to emit light toward the first surface (130) such that photons emitted by the discharge probe (121) when the spark gap device (100) is operated are incident on the first surface (130) and cause electron emission from the first surface (130);
wherein the first electrode (102) and the second electrode (104) are disposed in a sealed envelope (105), wherein the discharge probe (121) is positioned exterior to the sealed envelope (105),
**characterized in that**:
the discharge probe (121) is configured also to emit the light toward the second surface .

2. The spark gap device (100) of claim 1, wherein the discharge probe (121) comprises a third electrode (122) and a fourth electrode (122) sealed in a tube (124) filled with an inert gas (126).

3. The spark gap device (100) of claim 2, wherein third electrode (122), the fourth electrode (122), or both comprise a wire electrode and wherein the inert gas (126) is nitrogen.

4. The spark gap device (100) of either of claim 2 or 3, wherein a pressure of the inert gas (126) in the tube (124) is approximately 5 Torr.

5. The spark gap device (100) of any of claims 2 to 4, wherein the discharge probe (121) comprises a power source (128) configured to supply a voltage to the third electrode (122).

6. The spark gap device (100) of any preceding claim, wherein the first electrode (102) comprises a cathode and the second electrode (104) comprises an anode.

7. The spark gap device (100) of any preceding claim, wherein the spark gap device (100) does not include a radioactive component.

8. A method for generating a conductive plasma, comprising:
applying a voltage across a spark gap device of claim 1 (100) comprising a first electrode (102) and a second electrode (104), wherein the first electrode (102) comprises a surface (130) facing the second electrode (104);
generating free electrons at the surface (130) of the first electrode (102) using a discharge probe (121) as a light source (120); and
subsequent to generating the free electrons, generating the conductive plasma across the spark gap device (100);
wherein the first electrode (102) and the second electrode (104) are disposed in a sealed envelope (105); and
wherein the discharge probe (121) is positioned exterior to the sealed envelope (105), **characterized by** also generating free electrons at the surface of the second electrode (104) using the discharge probe (121) as a light source (120).

9. The method of claim 8, wherein free electrons are not generated by a radioactive isotope.

10. The method of either of claim 8 or 9, wherein the discharge probe (121) comprises a third electrode (122) sealed in a tube (124) filled with an inert gas (126).

11. The method of claim 10, wherein third electrode (122) comprises a wire electrode and wherein the inert gas (126) is nitrogen.

## Patentansprüche

1. Funkenstreckenvorrichtung (100), umfassend:
eine erste Elektrode (102) mit einer ersten Oberfläche (130);
eine zweite Elektrode (104) mit einer zweiten Oberfläche, die von der ersten Oberfläche (130) versetzt und dieser zugewandt ist; und
eine Entladungssonde (121), die dazu konfiguriert ist, Licht in Richtung der ersten Oberfläche (130) zu emittieren, sodass beim Betrieb der Funkenstreckenvorrichtung (100) von der Entladungssonde (121) emittierte Photonen auf die erste Oberfläche (130) auftreffen und bei der ersten Oberfläche (130) eine Elektronenemission verursachen;
wobei die erste Elektrode (102) und die zweite Elektrode (104) in einer versiegelten Hülle (105) angeordnet sind, wobei die Entladungssonde (121) außerhalb der versiegelten Hülle (105) angeordnet ist, **dadurch gekennzeichnet, dass**:
die Entladungssonde (121) dazu konfiguriert ist, dass sie das Licht auch in Richtung der zweiten Oberfläche emittiert.

2. Funkenstreckenvorrichtung (100) nach Anspruch 1, wobei die Entladungssonde (121) eine dritte Elektrode (122) und eine vierte Elektrode (122) umfasst, die in einem mit einem Inertgas (126) gefüllten Rohr (124) eingeschlossen sind.

3. Funkenstreckenvorrichtung (100) nach Anspruch 2, wobei die dritte Elektrode (122), die vierte Elektrode (122) oder beide eine Drahtelektrode umfassen und wobei es sich bei dem Inertgas (126) um Stickstoff handelt.

4. Funkenstreckenvorrichtung (100) nach Anspruch 2 oder 3, wobei ein Druck des Inertgases (126) in dem Rohr (124) ungefähr 5 Torr beträgt.

5. Funkenstreckenvorrichtung (100) nach einem der Ansprüche 2 bis 4, wobei die Entladungssonde (121) eine Stromquelle (128) umfasst, die dazu konfiguriert ist, die dritte Elektrode (122) mit einer Spannung zu versorgen.

6. Funkenstreckenvorrichtung (100) nach einem der vorhergehenden Ansprüche, wobei die erste Elektrode (102) eine Kathode umfasst und die zweite Elektrode (104) eine Anode umfasst.

7. Funkenstreckenvorrichtung (100) nach einem der vorhergehenden Ansprüche, wobei die Funkenstreckenvorrichtung (100) keine radioaktive Komponente enthält.

8. Verfahren zur Erzeugen eines leitfähigen Plasmas, umfassend:
Anlegen einer Spannung an eine Funkenstreckenvorrichtung nach Anspruch 1 (100), die eine erste Elektrode (102) und eine zweite Elektrode (104) umfasst, wobei die erste Elektrode (102) eine der zweiten Elektrode (104) zugewandte Oberfläche (130) umfasst;
Erzeugen freier Elektronen an der Oberfläche (130) der ersten Elektrode (102) unter Verwendung einer Entladungssonde (121) als Lichtquelle (120); und
nach dem Erzeugen der freien Elektronen Erzeugen des leitfähigen Plasmas über die Funkenstreckenvorrichtung (100) hinweg;
wobei die erste Elektrode (102) und die zweite Elektrode (104) in einer versiegelten Hülle (105) angeordnet sind; und
wobei die Entladungssonde (121) außerhalb der versiegelten Hülle (105) angeordnet ist, **dadurch gekennzeichnet, dass** unter Verwendung der Entladungssonde (121) als Lichtquelle (120) auch freie Elektronen an der Oberfläche der zweiten Elektrode (104) erzeugt werden.

9. Verfahren nach Anspruch 8, wobei freie Elektronen nicht durch ein radioaktives Isotop erzeugt werden.

10. Verfahren nach Anspruch 8 oder 9, wobei die Entladungssonde (121) eine dritte Elektrode (122) umfasst, die in einem mit einem Inertgas (126) gefüllten Rohr (124) eingeschlossen ist.

11. Verfahren nach Anspruch 10, wobei die dritte Elektrode (122) eine Drahtelektrode umfasst und wobei es sich bei dem Inertgas (126) um Stickstoff handelt.

## Revendications

1. Dispositif éclateur (100), comprenant :
une première électrode (102) ayant une première surface (130) ;
une deuxième électrode (104) ayant une seconde surface décalée par rapport à la première surface et faisant face à la première surface (130) ; et
une sonde de décharge (121) configurée pour émettre de la lumière vers la première surface (130) de telle sorte que les photons émis par la sonde de décharge (121) lorsque le dispositif éclateur (100) fonctionne sont incidents sur la première surface (130) et provoquent une émission d'électrons depuis la première surface (130) ;
la première électrode (102) et la deuxième électrode (104) étant disposées dans une enveloppe scellée (105), la sonde de décharge (121) étant positionnée à l'extérieur de l'enveloppe scellée (105),
**caractérisé en ce que** :
la sonde de décharge (121) est également configurée pour émettre la lumière vers la seconde surface.

2. Dispositif éclateur (100) selon la revendication 1, dans lequel la sonde de décharge (121) comprend une troisième électrode (122) et une quatrième électrode (122) scellées dans un tube (124) rempli d'un gaz inerte (126).

3. Dispositif éclateur (100) selon la revendication 2, dans lequel la troisième électrode (122), la quatrième électrode (122) ou les deux comprennent une électrode en fil et dans lequel le gaz inerte (126) est l'azote.

4. Dispositif éclateur (100) selon la revendication 2 ou 3, dans lequel une pression du gaz inerte (126) dans le tube (124) est d'environ 5 Torr.

5. Dispositif éclateur (100) selon l'une quelconque des revendications 2 à 4, dans lequel la sonde de décharge (121) comprend une source d'énergie (128) configurée pour fournir une tension à la troisième électrode (122).

6. Dispositif éclateur (100) selon l'une quelconque des revendications précédentes, dans lequel la première électrode (102) comprend une cathode et la deuxième électrode (104) comprend une anode.

7. Dispositif éclateur (100) selon l'une quelconque des revendications précédentes, dans lequel le dispositif éclateur (100) ne comporte pas de composant radioactif.

8. Procédé destiné à générer un plasma conducteur, comprenant :
l'application d'une tension aux bornes d'un dispositif éclateur selon la revendication 1 (100) comprenant une première électrode (102) et une deuxième électrode (104), dans lequel la première électrode (102) comprend une surface (130) faisant face à la deuxième électrode (104) ;
la génération d'électrons libres à la surface (130) de la première électrode (102) à l'aide d'une sonde de décharge (121) comme source de lumière (120) ; et
après la génération des électrons libres, la génération du plasma conducteur aux bornes du dispositif éclateur (100) ;
dans lequel la première électrode (102) et la deuxième électrode (104) sont disposées dans une enveloppe scellée (105) ; et
dans lequel la sonde de décharge (121) est positionnée à l'extérieur de l'enveloppe scellée (105), **caractérisé en ce qu'il** génère également des électrons libres à la surface de la deuxième électrode (104) à l'aide de la sonde de décharge (121) comme source de lumière (120).

9. Procédé selon la revendication 8, dans lequel les électrons libres ne sont pas générés par un isotope radioactif.

10. Procédé selon la revendication 8 ou 9, dans lequel la sonde de décharge (121) comprend une troisième électrode (122) scellée dans un tube (124) rempli d'un gaz inerte (126).

11. Procédé selon la revendication 10, dans lequel la troisième électrode (122) comprend une électrode en fil et dans lequel le gaz inerte (126) est l'azote.
